# EUROPÄISCHE PATENTANMELDUNG

(11) **EP 2 283 993 A2**
(43) Veröffentlichungstag der Anmeldung: **16.02.2011**
(21) Anmeldenummer: 10168297.9
(22) Anmeldetag: 02.07.2010
(51) Int. Cl.: B29C 65/08, B65B 9/20, B65B 51/30, B65B 51/22

(54) **Vorrichtung zum Schweißen von Kopfnähten von Schlauchbeuteln**

(30) Priorität: 05.08.2009 DE 102009037152
(71) Anmelder: Telsonic Holding AG, 9552 Bronschhofen (CH)
(72) Erfinder: Möglich, Hartmut, 76275 Ettlingen (DE)
(74) Vertreter: Dreiss

(57) **Zusammenfassung**

Die Erfindung betrifft eine Vorrichtung (26) zum Schweißen von Kopfnähten (28) von Schlauchbeuteln (12), insbesondere von kontinuierlich verarbeiteten Schlauchbeuteln (12), für die Integration in Verpackungsmaschinen (10), wobei ein erster U-förmiger Rahmen mit zwei freien Schenkeln und mit wenigstens einer am ersten Quersteg befestigten Sonotrode und ein zweiter U-förmiger Rahmen mit zwei freien Schenkeln und mit wenigstens einem am zweiten Quersteg befestigten Amboss vorgesehen sind.

## Beschreibung

### Beschreibung

Die Erfindung betrifft Vorrichtung zum Schweißen von Kopfnähten von Schlauchbeuteln, insbesondere von kontinuierlich verarbeiteten Schlauchbeuteln, für die Integration in Verpackungsmaschinen.

Vorrichtung zum Schweißen von Kopfnähten bei Schlaubeuteln, welche kontinuierlich verarbeitet werden, sind bekannt. Der Schlauchbeutel wird mittels einer Folie hergestellt, Dabei wird zunächst ein Folienschlauch mit einer Längsnaht erzeugt, und der Folienschlauch befüllt. Nachdem die gewünschte Füllmenge eingefüllt worden ist, wird der Schlauchbeutel vom Folienschlauch mittels einer Kopfnaht verschweißt und abgetrennt. Sodann kann der nächste zunächst noch offene Schlauchbeutel befüllt werden.

Bisher wurden auf horizontalen und vertikalen Schlauchbeutelmaschinen bereits Ultraschall-Schweißvorrichtungen eingesetzt. Diese Vorrichtungen waren als Einzelkomponenten in die Maschinen integriert. Das heißt, es bestanden diverse mechanische und elektrische Schnittstellen zwischen den Ultraschall-, Mechanik-und Elektrischen Funktionen. Zum Verschweißen des Schlauchbeutels und gegebenenfalls Abtrennen vom restlichen Folienschlauch wird eine Ultraschallschweißeinheit verwendet, welche eine oder mehrere Sonotroden und einen oder mehrere Ambosse aufweist. Zwischen die Sonotrode und den Amboss wird der Folienschlauch geführt und zum Verschweißen werden die Sonotrode und/oder der Amboss aufeinander zu bewegt und liegen dann mittels einer vorgegebenen Anpresskraft, die der Schweißkraft entspricht, aneinander an. Für die Lagerung und Bewegung der Sonotrode und des Ambosses sind an der Verpackungsmaschine Hubzylinder vorgesehen, an welchen die Sonotrode und der Amboss befestigt sind. Für eine optimale Verschweißung ist es unbedingt erforderlich, dass die Sonotrode und der Amboss exakt planparallel aufeinander zu bewegt und dann aneinander anliegen. Dies ist mit den Hubzylindern der Verpackungsmaschine nicht gewährleistet.

Der Erfindung liegt die Aufgabe zugrunde, eine Vorrichtung zu schaffen, mit der eine optimale Verschweißung von Kopfnähten von Schlauchbeuteln mittels Ultraschall erfolgen kann.

Diese Aufgabe wird mit einer Vorrichtung gelöst, die die Merkmale des Anspruchs 1 aufweist.

Die erfindungsgemäße Vorrichtung kann als komplette Funktionseinheit in die Verpackungsmaschine integriert werden. Die erfindungsgemäße Vorrichtung bildet also eine in sich geschlossene Funktionseinheit. Die Vorrichtung kann als Modul gebaut und vor dem Einbau getestet und anschließend mittels definierten Schmittstellen in die Verpackungsmaschine integriert werden. Dabei bilden die Schnittstellen von Ultraschall, Mechanik und Steuerung ein geschlossenes System. Dadurch verbessert sich die Prozessbeherrschung und die Integrierbarkeit des Ultraschallprozesses, z.B. die Ausrichtung der einzelnen Schweißkomponenten usw.. Dabei wird der Antrieb der bestehenden Verpackungsmaschine für das Erzeugen der Zustellbewegung genutzt. Optional kann das Modul auch mit einem eigenen Antrieb versehen werden.

Weitere Vorteile, Merkmale und Einzelheiten ergeben sich aus den Unteransprüchen und der nachfolgenden Beschreibung, in der auf die Zeichnung Bezug genommen wird. Die in der Zeichnung dargestellten und in den Ansprüchen und in der Beschreibung erwähnten Merkmale können jeweils einzeln für sich erfindungswesentlich sein.

In der Zeichnung zeigen:
- Figur 1: eine schematische Wiedergabe einer Vorrichtung zum Formen eines Schlauchbeutels mit angedeuteter Befüllvorrichtung und Schweißvorrichtung;
- Figur 2: eine perspektivische Ansicht einer Schweißvorrichtung gemäß dem Stand der Technik;
- Figur 3: eine perspektivische Ansicht der Schweißvorrichtung gemäß Figur 2 in geöffneter Position mit eingeführtem Schlauchbeutel;
- Figur 4: eine Draufsicht auf die Vorrichtung gemäß Figur 3 in Richtung des Pfeils IV; und
- Figur 5: eine Draufsicht auf die Vorrichtung gemäß Figur 3 in Richtung des Pfeils V in geschlossener Position.

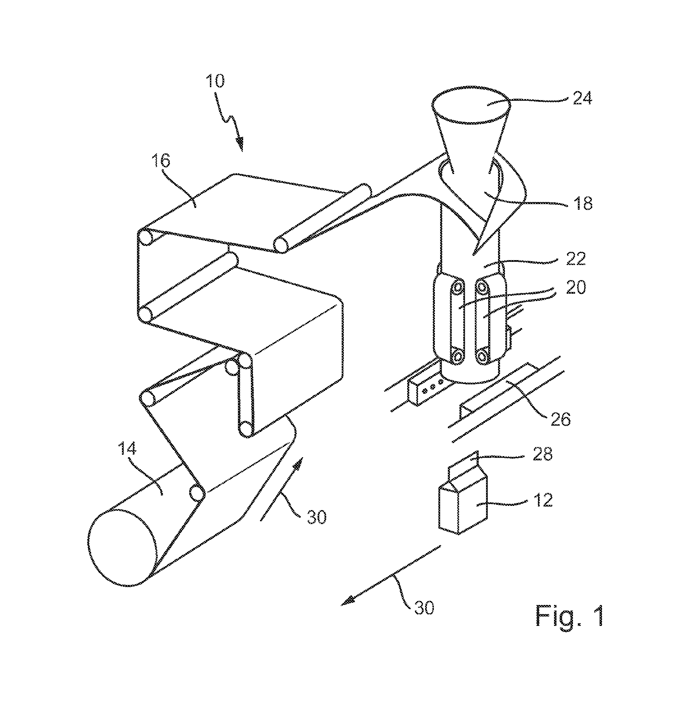

In der Figur 1 ist eine insgesamt mit 10 bezeichnete Vorrichtung zum Formen eines Schlauchbeutels 12 dargestellt. Dabei wird von einer Vorratsrolle 14 eine Folienbahn 16 in Richtung des Pfeils 30 abgezogen und über eine Schlauchformeinrichtung 18 geführt. Über eine Längssiegeleinrichtung 20 wird der Folienschlauch 22 mit einer Längsnaht versehen und über einen Trichter 24 wird der Folienschlauch 22 befüllt. Nachdem die vorgegebene Füllmenge eingefüllt worden ist, wird der Folienschlauch 22 mittels einer Schweißvorrichtung 26 quer verschweißt und abgeschnitten. Dabei wird eine Kopfnaht 28 am Schlauchbeutel 12 erzeugt und dieser dicht verschlossen und vom restlichen Folienschlauch 22 getrennt. Der Schlauchbeutel 12 wird in Richtung des Pfeils 32 abtransportiert.

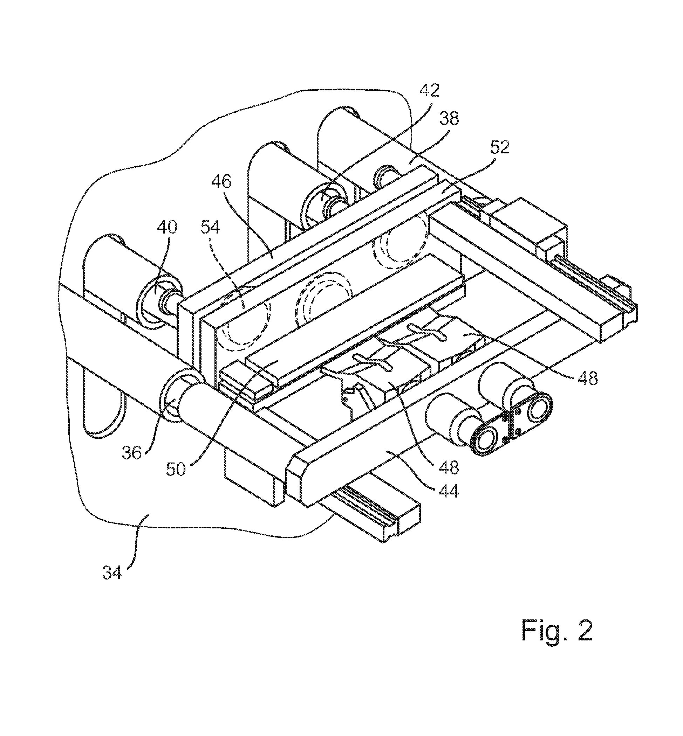

Die Figur 2 zeigt in vergrößerter Wiedergabe eine Schweißvorrichtung, wie sie aus dem Stand der Technik bekannt ist. Von einer Verpackungsmaschine 34 ragen vier Hubzylinder 36, 38 40 und 42 ab. An den freien Enden der Hubzylinder 36 und 38 ist ein Querträger 44 und an den freien Enden der Hubzylinder 40 und 42 ist ein Querträger 46 befestigt. Der Querträger 44 trägt zwei Sonotroden 48 und der Querträger 46 trägt einen Amboss 50, der von einer Druckpatte 52 mit Pneumatikzylindern 54 unterstützt wird. Über die Hubzylinder 36, 38 , 40 und 42 können die Querträger 44 und 46 in Richtung aufeinander zu und weg voneinander bewegt werden. Dadurch kann zwischen den Sonoroden 48 und dem Amboss 50 ein Ultraschallschweißvorgang stattfinden. Es ist jedoch nicht gewährleistet, dass die Querträger 44 und 46 planparallel zueinander bewegt werden, da die Hubzylinder 36, 38 , 40 und 42 einerseits nicht parallel zueinender ausgerichtet sein können, andererseits die Hubgeschwindigkeit unterschiedlich sein kann.

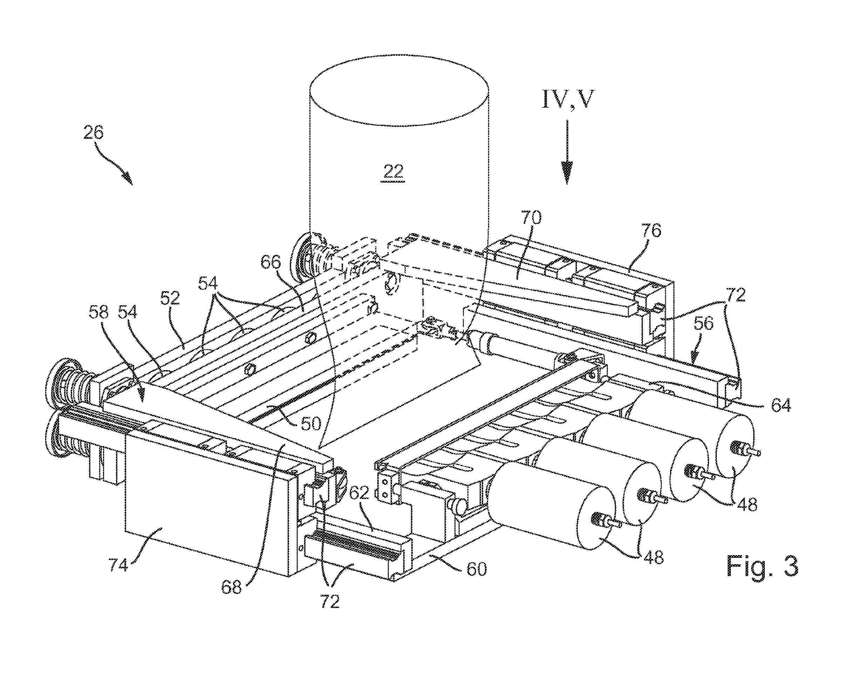

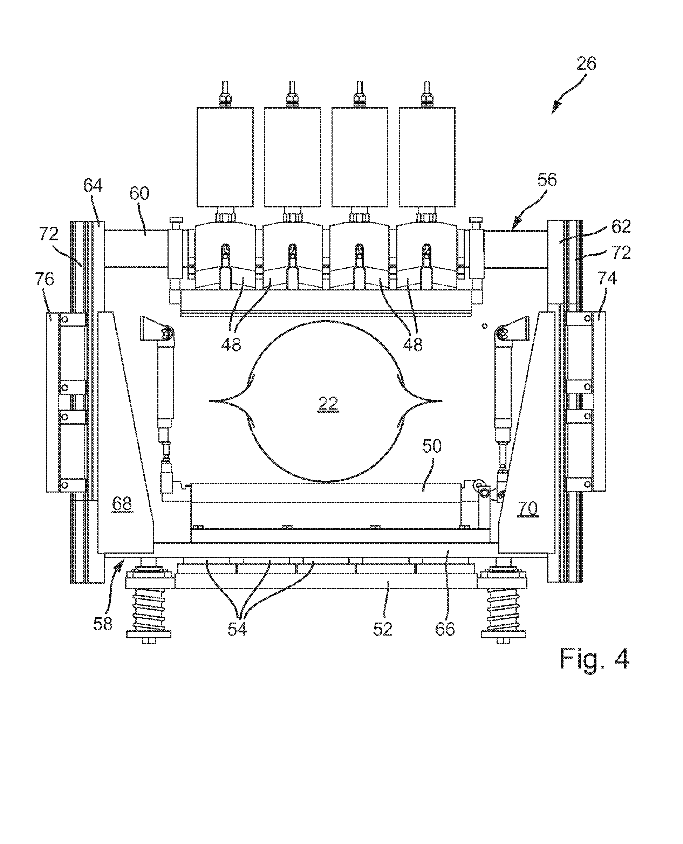

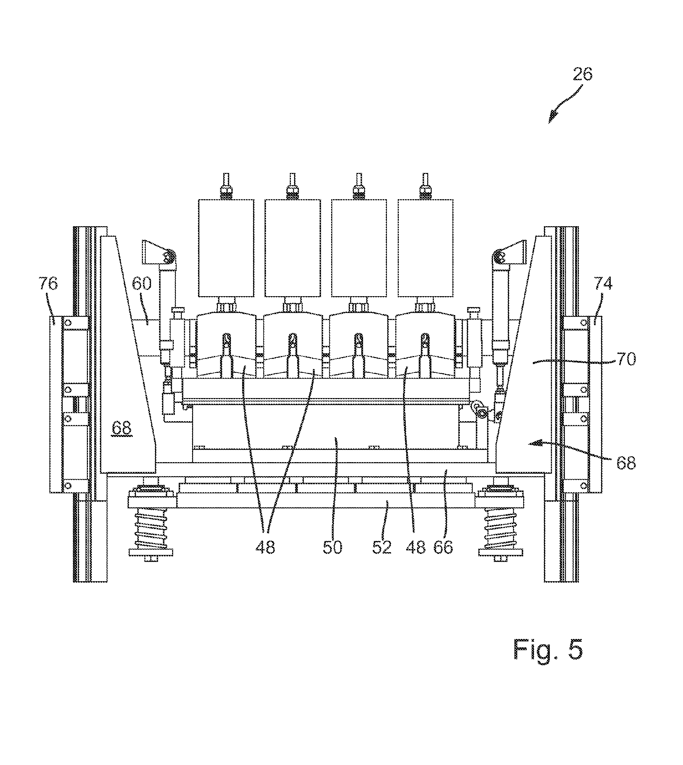

Die Figuren 3 bis 5 zeigen in vergrößerter Wiedergabe eine bevorzugte Ausführungsform der Schweißvorrichtung 26, die einen ersten U-förmigen Rahmen 56 und einen zweiten U-förmigen Rahmen 58 aufweist. Der erste Rahmen 56 weist einen ersten Quersteg 60 und zwei Schenkel 62 und 64 und der zweite Rahmen 58 weist einen zweiten Quersteg 66 und zwei Schenkel 68 und 70 auf. Am ersten Quersteg 60 sind vier Sonotroden 48 montiert, deren Arbeitsflächen in Richtung eines am zweiten Quersteg 66 montierten Ambosses 50 zeigen. Die Schenkel 62, 64 und 68, 70 sind jeweils mit Längsführungen 72 versehen, wobei die Längsführungen 72 der Schenkel 62, 64 in einer Schiebeführung 74 und die Längsführungen 72 der Schenkel 68, 70 in einer Schiebeführung 76 geführt und verschieblich gelagert sind. Auf diese Weise wird sichergestellt, dass die Schenkel 62, 64 und 68, 70 parallel zueinander verschoben werden können. Hierdurch ist sichergestellt, dass auch die Rahmen 56 und 58 derart gegeneinander verlagert werden, dass die Querstege 60 und 66 parallel zueinander bewegt werden. Der Antrieb der Rahmen 56 und 58 erfolgt dadurch, dass die an der Verpackungsmaschine 34 vorgesehenen Hubzylinder 36, 38 40 und 42 mit den Schenkeln 62, 64 und 68, 70 verbunden werden.

Der wesentliche Vorteil besteht darin, dass die beiden Rahmen 56 und 58 das Grundgerüst der Schweißvorrichtung 26 sind, die eine separate Funktionseinheit bildet. Es wird sichergestellt, dass über die gesamte Länge des Quersteges 60 die Schweißkraft gleichmäßig in das Werkstück eingeleitet wird. Außerdem kann die Einheit extern fertig moniert und getestet werden. Sie muss dann lediglich noch mit der Verpackungsmaschine 34 gekoppelt werden.

## Patentansprüche

1. Vorrichtung zum Schweißen von Kopfnähten (28) von Schlauchbeuteln (12), insbesondere von kontinuierlich verarbeiteten Schlauchbeuteln, (12) für die Integration in Verpackungsmaschinen (23), **dadurch gekennzeichnet, dass** ein erster U-förmiger Rahmen (56) mit zwei freien Schenkeln (62, 64) und mit wenigstens einer am ersten Quersteg (60) befestigten Sonotrode (48) und ein zweiter U-förmiger Rahmen (58) mit zwei freien Schenkeln (68, 70) und mit wenigstens einem am zweiten Quersteg (66) befestigten Amboss (50) vorgesehen sind.

2. Vorrichtung nach Anspruch 1, **dadurch gekennzeichnet, dass** die jeweils beiden Schenkel (62, 64, 68, 70) der Rahmen (56, 58) parallel zueinander ausgerichtet sind.

3. Vorrichtung nach Anspruch 1 oder 2, **dadurch gekennzeichnet, dass** jeweils ein Schenkel (62, 68) des einen Rahmens (56) mit einem Schenkel (64, 70) des anderen Rahmens (58) über eine Schiebeführung (74, 76) miteinander verbunden ist.

4. Vorrichtung nach Anspruch 3, **dadurch gekennzeichnet, dass** die beiden Schiebeführungen (74, 76) parallel zueinander ausgerichtet sind.

5. Vorrichtung nach einem der vorhergehenden Ansprüche,
**dadurch gekennzeichnet, dass** die beiden Rahmen (56, 58) in Längsrichtung ihrer freien Schenkeln (62, 64, 68, 70) gegeneinander verschiebbar sind.

6. Vorrichtung nach einem der vorhergehenden Ansprüche, **dadurch gekennzeichnet, dass** die beiden Querstege (60, 66) der Rahmen (56, 58) parallel zueinander ausgerichtet sind.

7. Vorrichtung nach einem der vorhergehenden Ansprüche, **dadurch gekennzeichnet, dass** der erste Rahmen (56) mit einem ersten Antrieb (36, 38) der Verpackungsmaschine (34) verbindbar ist.

8. Vorrichtung nach einem der vorhergehenden Ansprüche, **dadurch gekennzeichnet, dass** der zweite Rahmen (58) mit einem zweiten Antrieb (40, 42) der Verpackungsmaschine (34) verbindbar ist.

9. Vorrichtung nach einem der vorhergehenden Ansprüche, **dadurch gekennzeichnet, dass** sie eine in sich abgeschlossene Funktionseinheit bildet und/oder dass sie in die Verpackungsmaschine (34) integrierbar ist.

10. Vorrichtung nach einem der vorhergehenden Ansprüche, **dadurch gekennzeichnet, dass** am Amboss (50) ein Schneideinrichtung zum Trennen des Schlauchbeutels (12) vorgesehen ist.

11. Vorrichtung nach einem der vorhergehenden Ansprüche, **dadurch gekennzeichnet, dass** sie als Einheit auf in der Verpackungsmaschine (34) vorgesehene Schubstangen oder an Hubzylinder (36, 38, 40, 42) adaptierbar ist.

12. Vorrichtung nach Anspruch 11, **dadurch gekennzeichnet, dass** die Schließbewegung durch diese Schubstangen oder Hubzylinder (36, 38, 40, 42) erzeugt wird.

13. Vorrichtung nach einem der vorhergehenden Ansprüche,
**dadurch gekennzeichnet, dass** die Schweißkraft durch in die Vorrichtung (26) integrierte Druckelemente (54) erzeugt wird.

14. Vorrichtung nach einem der vorhergehenden Ansprüche, **dadurch gekennzeichnet, dass** die Rahmen (56, 58) mittels eines eigenen Antriebs gegeneinander verschiebbar sind.

15. Vorrichtung nach einem der vorhergehenden Ansprüche, **dadurch gekennzeichnet, dass** ein Mittel zur Überwachung der Anwesenheit eines Schlauchbeutels (12) vorgesehen ist.
